# EUROPEAN PATENT APPLICATION

(11) **EP 4 811 782 A1**
(43) Date of publication of application: **23.09.2026**
(21) Application number: 25305348.2
(22) Date of filing: 17.03.2025
(51) Int. Cl.: H04N 19/119, H04N 19/12, H04N 19/157, H04N 19/176, H04N 19/44, H04N 19/61

(54) **TRANSFORM UNIT SPLIT INTERACTION WITH TEMPLATE-BASED TOOLS**

(71) Applicant: InterDigital CE Patent Holdings, SAS, 75017 Paris (FR)
(72) Inventor: NASER, Karam, 35250 MOUAZE (FR); PURI, Saurabh, SAINT-LAZARE, J7T 0P6 (CA); LE LEANNEC, Fabrice, 35830 BETTON (FR); BONNINEAU, Charles, MONTREAL, H2J 1G1 (CA)
(74) Representative: Vossius & Partner Patentanwälte Rechtsanwälte mbB

(57) **Abstract**

Systems, methods, and devices disclosed herein are related to a transform unit (TU) split interaction with template-based tools. An encoding/decoding device may include a processor. The device may be configured to receive an indication that a template-based tool is enabled for a coding unit. The device may split the coding unit into a first TU and/or a second TU. The device may determine a first prediction of the first TU based on a first template associated with the first TU. The device may determine a second prediction of the second TU based on a second template associated with the second TU. The device may encode/decode the coding unit based on the first prediction and/or the second prediction. The device may include, in video data, the encoded coding unit and/or an indication that a template-based tool is enabled for the coding unit.

## Description

### BACKGROUND

The present application is related to video coding systems that may be used to compress digital video signals, e.g., to reduce the storage and/or transmission bandwidth needed for such signals. Video coding systems may include, for example, block-based, wavelet-based, and/or object-based systems.

### BRIEF SUMMARY

Systems, methods, and devices disclosed herein are related to a transform unit (TU) split interaction with template-based tools. An encoding/decoding device may include a processor. The device may be configured to receive an indication that a template-based tool is enabled for a coding unit. The device may split the coding unit into a first TU and/or a second TU. The device may determine a first prediction of the first TU based on a first template associated with the first TU. The device may determine a second prediction of the second TU based on a second template associated with the second TU. The device may decode the coding unit based on the first prediction and/or the second prediction.

The device may include one or more features. For example, the coding unit may be a first coding unit. The device may split a second coding unit into a third TU and/or a fourth TU. The device may, based on the second coding unit being split into a third TU and/or a fourth TU, determine that the template-based tool may be disabled for the second coding unit. The device may decode the second coding unit based on a non-template based tool. The device may receive an indication that the template-based tool may be enabled for a second coding unit. The device may, based on the indication, skip TU splitting for the second coding unit. The device may decode the second coding unit based on the template-based tool.

The coding unit may be a first coding unit. The device may split a second coding unit into a third TU and/or fourth TU. The device may determine that a boundary of the third TU at least partially overlaps with a boundary of the second coding unit. The device may determine a third prediction of the second coding unit based on a third template associated with the boundary of the third TU. The device may decode the second coding unit based on the third prediction.

The device may, based on receiving the indication that the template-based tool is enabled for the coding unit, determine to split the coding unit into the first and/or second TUs prior to performing a template analysis using the template-based tool.

A device may be configured to split a coding unit into a first TU and/or a second TU. The device may determine a first prediction of the first TU based on a first template associated with the first TU. The device may determine a second prediction of the second TU based on a second template associated with the second TU. The device may encode the coding unit based on the first and/or second predictions. The device may include, in video data, the encoded coding unit and/or an indication that a template-based tool may be enabled for the coding unit. The

The device may include one or more features. For example, the coding unit may be a first coding unit. The device may split a second coding unit into a third TU and/or a fourth TU. The device may, based on the second coding unit being split into a third TU and/or a fourth TU, determine that the template-based tool may be disabled for the second coding unit. The device may encode the second coding unit. The device may include, in the video data, the encoded second coding unit. The video data may not include an indication that the template-based tool is enabled for the second coding unit.

The coding unit may be a first coding unit. The device may encode a second coding unit based on the template-based tool. The device may, based on the second coding unit being encoded based on the template-based tool, skip TU splitting for the second coding unit. The device may include, in the video data, the encoded second coding unit. The video data may not include syntax associated with TU splitting.

The coding unit may be a first coding unit. The device may split a second coding unit into a third TU and/or a fourth TU. The device may determine that a boundary of the third TU at least partially overlaps with a boundary of the second coding unit. The device may determine a third prediction of the second coding unit based on a third template associated with the boundary of the third TU. The device may encode the second coding unit based on the third prediction. The device may include, in the video data, the encoded second coding unit.

The device may include, in the video data, the indication that the template-based tool is enabled for the coding unit based on determining to split the coding unit into the first and/or second TUs prior to performing a template analysis using the template-based tool.

A method according to one or more features as described with reference to an encoder and/or decoder may be provided herein. In examples, the systems, methods, and devices described herein may involve a signal (e.g., from an encoder and/or received by a decoder). A computer-readable medium may include instructions for causing one or more processors to perform methods described herein. A computer program product may include instructions which, when the program is executed by one or more processors, may cause the one or more processors to carry out the methods described herein.

### BRIEF DESCRIPTION OF THE DRAWINGS

The following detailed description will be better understood when read in conjunction with the appended drawings, in which there are shown examples of one or more of the multiple embodiments of the present disclosure. It should be understood, however, that the embodiments described herein are not limited to the precise arrangements and instrumentalities shown in the drawings.
FIG. 1 shows an example system according to one or more embodiments of the present disclosure.
FIG. 2 shows an example video encoder according to one or more embodiments of the present disclosure.
FIG. 3 shows an example video decoder according to one or more embodiments of the present disclosure.
FIG. 4 illustrates examples of a SBT position, type, and transform type for a coding unit.
FIG. 5A illustrates example sub-partitions for 4x8 and/or 8x4 coding units.
FIG. 5B illustrates example sub-partitions for coding units other than 4x8, 8x4, and/or 4x4.
FIG. 6 is a block diagram illustrating an example of performing a template calculation at a coding unit (CU) level and at a transform unit (TU) level.

### DETAILED DESCRIPTION

In describing the various embodiments of the present disclosure, certain terminology is used herein for convenience only and should not be considered as limiting such embodiments. In the drawings, the same reference numerals are employed for designating the same elements throughout the several figures and the present description.

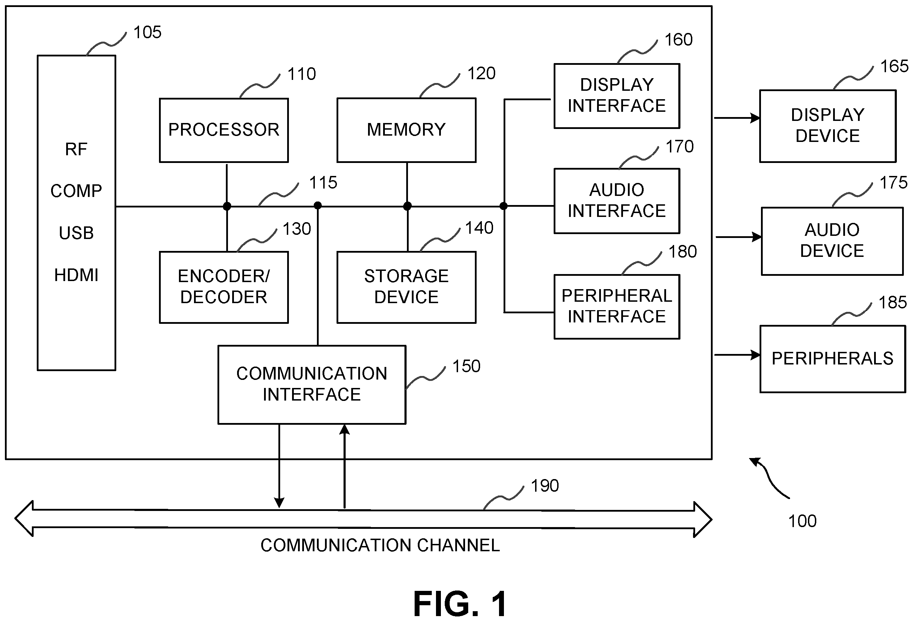

Referring to the drawings, there is shown in FIG. 1 a block diagram illustrating an example system 100 in which embodiments of the present disclosure can be implemented. The system 100 may be an electronic device including, for example, a personal computer, laptop computer, mobile phone, tablet computer, multimedia set-top box, digital television receiver, personal video recording system, connected home appliance, vehicle control and/or entertainment system, and server. One or more elements of the system 100, singly or in combination, may be implemented as an integrated circuit (IC), multiple ICs, and/or discrete components. For example, in one embodiment, the processing, encoding and/or decoding elements of system 100 are distributed across multiple ICs and/or discrete components. In some embodiments, the system 100 is communicatively coupled to and/or in communication with other systems or devices, via, for example, a communications bus or dedicated input/output ports.

One or more of the elements of system 100 may be provided within an integrated housing, with such elements being interconnected and able to transmit data therebetween using any suitable connection arrangement 115 generally known in the art, including, for example, an internal bus (e.g., I2C bus), wiring, and printed circuit boards.

The system 100 may include at least one processor 110 configured to execute instructions for implementing the embodiments described herein, including signal/data coding and processing. The processor 110 may be a general-purpose processor or microprocessor, digital signal processor (DSP), one or more microprocessors in association with a DSP core, a controller, a microcontroller, application specific integrated circuits (ASICs), field programmable gate arrays (FPGAs), a state machine, and the like. The processor 110 may include at least one central processing unit (CPU), embedded memory, input and output interfaces, and other circuitries.

The system 100 may include at least one memory 120, for example, a volatile memory device and/or a non-volatile memory device. The system 100 may include a storage device 140, that may be or include non-volatile memory and/or dynamic volatile memory, including EEPROM, ROM, PROM, RAM, DRAM, SRAM, DDR, flash, magnetic disk drives, solid state drives (SSD) and/or optical disk drives. The storage device 140 may be or include, for example, an internal storage device, an attached storage device, and/or a network accessible storage device. Although shown separately, the memory 120 and the storage device 140 may be collocated, integrated together, or otherwise combined.

The system 100 may include an encoder/decoder module 130 configured to process video data and to provide encoded video data or decoded video data. The encoder/decoder module 130 may include one or more processors and/or memory (not shown). Although FIG. 1 depicts the encoder/decoder module 130 as a separate element of system 100, it will be understood that the processor 110 and the encoder/decoder module 130 may be collocated and/or integrated together as a combination of hardware and/or software, e.g., in an electronic package or chip. The encoder/decoder module 130 may be or include one or more modules that may be included in one or more separate devices that perform encoding and/or decoding functions.

Instructions for execution by the processor 110 and/or the encoder/decoder module 130 may be stored in the storage device 140 and subsequently loaded into memory 120 for execution by the processor 110. In some embodiments, one or more of processor 110, memory 120, storage device 140, and encoder/decoder module 130 may store one or more items when performing the processes disclosed herein. Such items may include input video, decoded video or portions thereof, bitstreams, matrices, variables, operational logic, and intermediate and/or final results from processing of equations, formulas, or operations.

In some embodiments, the memory of the processor 110 and/or the encoder/decoder module 130 may be used to store instructions and/or provide working memory for video encoding and decoding functions. In some embodiments, memory external to the processor 110 and/or the encoder/decoder module 130 (e.g., the memory 120 and/or the storage device 140) may be used for one or more of these functions and/or, for example, to store the operating system of a television.

The system 100 may obtain or receive information via one or more input devices, interfaces, and/or ports as indicated in input block 105. Examples of the input devices include a radio frequency (RF) device for transmitting and/or receiving RF signals over various media, for example, RF signals received over the air from a broadcaster; component video (COMP) inputs; a Universal Serial Bus (USB) input; and/or a High-Definition Multimedia Interface (HDMI) input. Other examples include composite video input (not shown). In some embodiments, the input devices are associated with respective input processing elements, e.g., those generally known in the art. For example, the RF device may be associated with elements suitable for selecting a desired frequency (e.g., selecting or band-limiting a signal) or performing error correction on the signal. The USB and/or HDMI inputs may include respective interface processors and transceivers (or transmitters and receivers) for coupling the system 100 to other devices via USB and/or HDMI ports or connections. Various forms of input processing may be implemented, for example, by and/or within a separate input processing device or the processor 110.

The system 100 may include a communication interface 150 that enables wired and/or wireless communication with other devices, e.g., via a communication channel 190. The communication interface 150 may include one or more transceivers, modems, network cards and the like. The communication channel 190 may be or include wired and/or wireless mediums.

In some embodiments, data may be streamed to the system 100 via wired and/or wireless networks. Examples of such wireless networks include cellular, Bluetooth or Wi-Fi (e.g., IEEE 802.11) networks. The wired and/or wireless networks may include one or more base stations (e.g., cellular base stations, access points, etc.), and/or user equipment (e.g. cellular user equipment, stations, etc.), and/or other network elements that communicate with the system 100 via the communication interface 150 and communication channel 190, whereby the system 100 may obtain data streamed from streaming applications (e.g., OTT services) via various networks, including the Internet. In some embodiments, data is streamed to the system 100 via the input block 105 (e.g., using a set-top box that delivers data via the HDMI connection or the RF connection). In some embodiments, data is received by the system 100 in a non-streaming manner.

The system 100 may provide one or more output signals to one or more output devices. The output devices may include a display device 165 (e.g., touchscreen display, monitor, etc.), an audio device 175 (e.g., speakers), and other peripheral devices 185, including, for example, a stand-alone DVR, a disk player, a stereo system, a lighting system, and other devices that provide a function based on the output of the system 100. The display device 165 can be for a television, tablet, laptop, mobile phone, head-mounted display, or other device. In some embodiments, control signals are communicated between the system 100 and the display device 165, the audio device 175, and/or the peripheral devices 185, enabling device-to-device control with or without user intervention. The output devices may couple to and/or communicate with the system 100 via dedicated connections via respective display, audio, and peripheral interfaces 160, 170, 180. Alternatively, the output devices may couple to and/or communicate with the system 100 via the communication channel 190 and the communication interface 150.

The display device 165 and the audio device 175 may be collocated, integrated, or otherwise combined with the other components of system 100 in a single unit (e.g., a television). Alternatively, the display device 165 and the audio device 175 may be separate from one or more of the other components of the system 100. In embodiments in which the display device 165 and the audio device 175 are external components, the output signals may be provided via dedicated outputs and/or connections, including, for example, HDMI ports, USB ports, or COMP outputs.

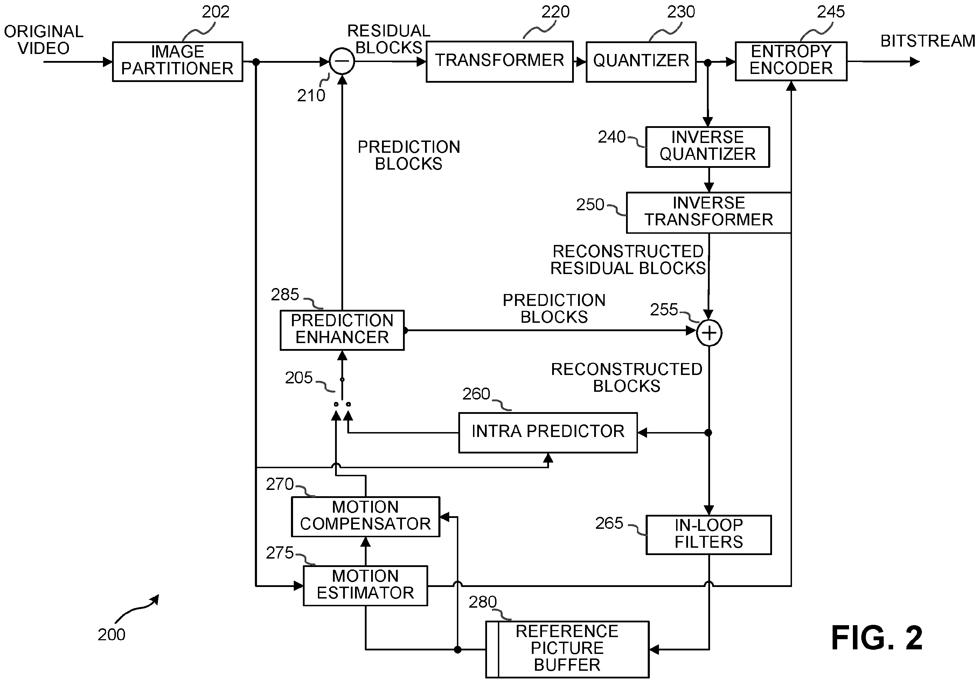

FIG. 2 is a block diagram illustrating an example video encoder 200 that may be employed by the system 100 (e.g., via the encoder/decoder module 130) described with respect to FIG. 1. The video encoder 200 may be an encoder that employs video compression technologies, standards, specification, or protocols, including Advanced Video Coding (AVC, H.264/MPEG-4), High Efficiency Video Coding (HEVC, H.265), Versatile Video Coding (VVC, H.266), Essential Video Coding (EVC, MPEG-5), AOMedia Video 1 (AV1), VP9, or the Enhanced Compression Model (ECM), and variations or improvements thereof. Those skilled in the art will understand that the various embodiments described herein are not limited to a specific standard and can be applied to other standards and recommendations, as well as extensions thereof.

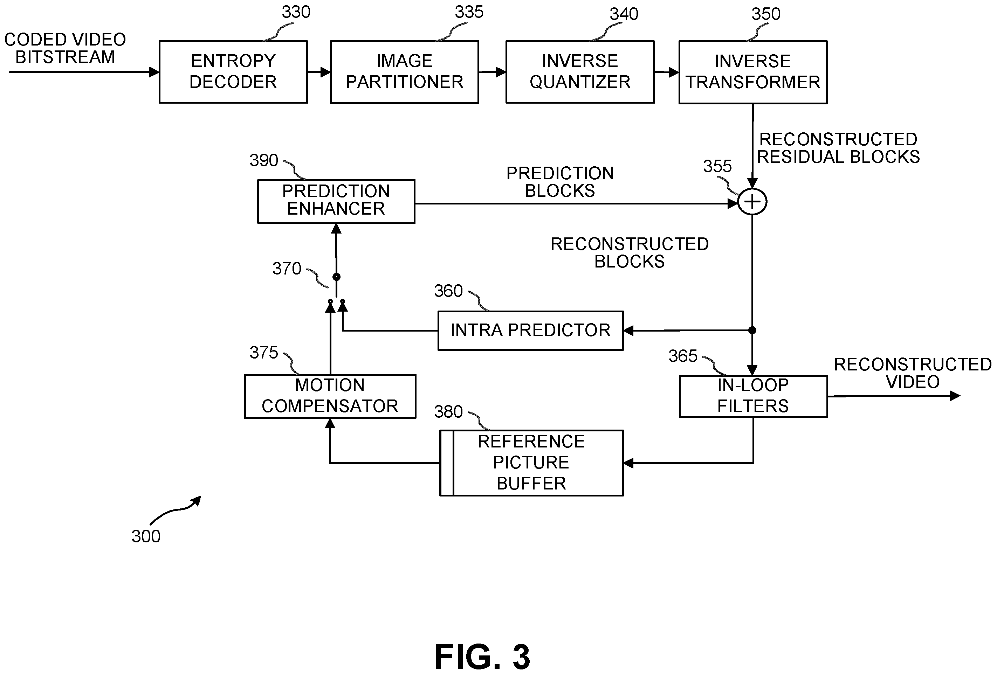

Some embodiments disclosed herein are described with reference to a coding unit (CU) or block of a video frame (or a video image or picture) to which coding tools may be applied by the video encoder 200 and/or by the video decoder 300 (described below with reference to FIG. 3). Generally, embodiments described herein may be applied to a video region formed by a video partition of any shape or size. The video region may be a video slice, a coding tree unit (CTU), or a CU (to which inter prediction or intra prediction can be applied), or a partition thereof, each of which can include samples of a luma component, *Y,* and chroma components, *U* and *V* (also denoted herein by *C*, *Cb, Cr*).

Referring generally to FIG. 2 and the video encoder 200, video data (e.g., one or more video frames) is encoded generally as described below. Prior to encoding, video data may be preprocessed by a precoding processor (not shown). The pre-processing may include, for example, applying a color model transform to the input color components of the input video data (e.g., conversion from RGB 4:4:4 to YUV 4:2:0) or mapping the color components of the input video data to obtain a signal distribution that is more resilient to compression (for instance, applying a histogram equalizer and/or a denoising filter to one or more of the video data's color components). The pre-processing may include associating metadata (for example, a supplemental enhancement information (SEI) message) with the video data that can be attached to a coded video bitstream. After pre-processing, if any, an image (frame) to be encoded is partitioned into CUs (blocks) by an image partitioner 202.

In general, a CU may include a luma block and associated chroma blocks. As such, functions of the video encoder 200 described herein as applied to a CU refer generally to the luma block and the respective chroma blocks. The CUs may be encoded using an intra prediction mode performed by an intra predictor 260. In intra prediction mode, the content of a CU in a frame is predicted based on content from one or more other CUs of the same frame (or region), using reconstructed blocks of other CUs output from an adder 255. The CUs may also or alternatively be encoded using an inter prediction mode, in which motion estimation and motion compensation are performed by a motion estimator 275 and a motion compensator 270, respectively. In inter prediction mode, the content of a CU in a frame is predicted based on content from one or more reconstructed areas of reference frames, available from a reference picture buffer 280.

The video encoder 200 selects or otherwise determines at 205 which prediction mode (intra prediction mode and/or inter prediction mode) to use for encoding a CU. The selected prediction mode may be enhanced (e.g., filtered) by a prediction enhancer 285. Based on the selected mode, a prediction for the CU is generated. A residual block is determined based on the prediction (e.g., prediction block, predicted CU) and the input CU. In some embodiments, such determination is made by a subtractor 210.

The residual block or a partition thereof (e.g., a transform block) is transformed into transform coefficients by a transformer 220. The transform coefficients are quantized by a quantizer 230. An entropy encoder 245 performs entropy encoding of the quantized transform coefficients and coding parameters (e.g., syntax elements including motion vectors and other control data) to form a bitstream of coded video data.

In addition to coding the original video blocks as described herein, the video encoder 200 reconstructs the coded blocks to provide references for future predictions. Thus, quantized transform coefficients (from the quantizer 230) are de-quantized by an inverse quantizer 240, and inverse transformed by an inverse transformer 250, to reconstruct (decode) the residual blocks. The reconstructed residual blocks and prediction blocks are combined (e.g., by the adder 255) to form reconstructed blocks. Thus, the video encoder 200 performs decoding operations through which the encoded images (frames) are reconstructed.

In-loop filters 265 may be applied to the reconstructed image (formed by the reconstructed blocks). The filtered reconstructed image(s) are stored in the reference picture buffer 280 and used by the motion estimator 275 and motion compensator 270, as explained above. The in-loop filters 265 can be applied to the reconstructed samples of an image to reduce distortions introduced by the encoding process. For example, a deblocking filter (DBF), bilateral filter (BIF), sample adaptive offset (SAO), and/or adaptive loop filter (ALF) can be applied to reduce encoding artifacts.

FIG. 3 is a block diagram illustrating an example of video decoder 300 that may be employed by the system 100 (e.g., via the encoder/decoder module 130) described with respect to FIG. 1. Generally, operational features of the video decoder 300 are reciprocal to operational features of the video encoder 200. In the video decoder 300, a coded video bitstream (e.g., generated by the video encoder 200 or another video encoding device or process) is entropy-decoded by an entropy decoder 330 to obtain transform coefficients, motion vectors, and other coding parameters. Based on the coding parameters, an image partitioner 335 divides the picture accordingly. The quantized transform coefficients are de-quantized by an inverse quantizer 340 and inverse transformed by an inverse transformer 350 to decode (e.g., reconstruct) respective residual blocks. Depending on the selected prediction mode, a predicted block can be obtained at 370 from an intra predictor 360 (e.g., intra prediction) or from a motion compensator 375 (e.g., inter prediction) and may be enhanced (e.g., filtered) by a prediction enhancer 390, generating a prediction block. The reconstructed residual blocks are combined with prediction blocks (e.g. by an adder 355), resulting in reconstructed blocks.

In-loop filters 365 (e.g., DBF, BIF, SAO, and/or ALF) can be applied to the reconstructed image (formed by the reconstructed blocks), to output reconstructed (decoded) video. The filtered reconstructed image is also stored in a reference picture buffer 380 for reference by the motion compensator 375.

A post-decoding processor (not shown) can process the reconstructed video data. For example, post-decoding processing can include an inverse color model transform (e.g., conversion from YUV 4:2:0 to RGB 4:4:4) or an inverse mapping to reverse the mapping process performed by the pre-encoding processor described with respect to FIG. 2. The post-decoding processor can use metadata derived by the pre-encoding processor and/or signaled in the video bitstream.

Examples described herein may be related to splitting a coding block into one or more transform blocks and/or an interaction with template-based tool(s). For example, if/when a block is split into one or more transform blocks, the template calculation that may be performed on a block (e.g., a full block size) may not be representative for the current transform block.

A subblock transform (SBT) may be described herein.

An SBT may be provided for an inter-predicted CU. In an SBT mode, a sub-part of the residual block may be coded for the CU. If/when an inter-predicted CU with cu_cbf is equal to 1, the cu_sbt flag may be signaled to indicate if/whether the (e.g., whole) residual block or a sub-part of the residual block is coded. In the former case, inter multiple transform selection (MTS) information may be (e.g., further) parsed to determine the transform type of the CU. In the latter case, a part of the residual block may be coded with an inferred adaptive transform and/or the other part of the residual block may be zeroed out.

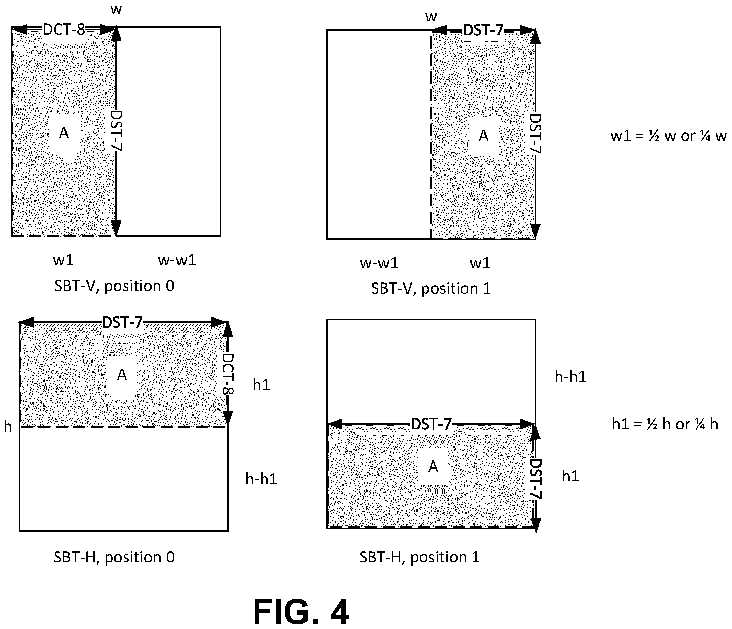

When SBT is used for an inter-coded CU, an SBT type and/or SBT position information may be signaled in video data (e.g., the bitstream). There may be two SBT types and/or two SBT positions, as indicated in FIG.4. For SBT-V or SBT-H, the transform unit (TU) width or height may equal to half of the CU width or height or 1/4th of the CU width or height, resulting in 2:2 split or 1:3/3:1 split respectively. The 2:2 split may be a binary tree (BT) split while the 1:3/3:1 split may be an asymmetric binary tree (ABT) split. In ABT splitting, (e.g., only) the small region may include the non-zero residual. If a (e.g., one) dimension of a CU is 8 in luma samples, the 1:3/3:1 split along that dimension may now be included. There may be (e.g., at most) 8 SBT modes for a CU.

Position-dependent transform core selection may be applied on luma transform blocks in SBT-V and SBT-H (e.g., chroma TB may (e.g., always) use DCT-2). The at least two positions of SBT-H and SBT-V may be associated with one or more (e.g., different) core transforms. The horizontal and/or vertical transforms for a (e.g., each) SBT position may be specified in FIG. 4. For example, the horizontal and/or vertical transforms for SBT-V position 0 may be DCT-8 and DST-7, respectively. If/when a first (e.g., one) side of the residual TU is greater than 32, the transform for one or more (e.g., both) dimensions may be set as DCT-2. The subblock transform may jointly specify the TU tiling, CBF, and/or horizontal and vertical core transform type of a residual block.

The SBT may not be applied to the CU coded with combined inter-intra mode.

Quantization and/or quantization parameter control may be described herein.

In examples, a (e.g., maximum) quantization parameter (QP) may be set as 63 (e.g., instead of 51).The signaling of a first (e.g., an initial) QP may be changed accordingly. The first (e.g., initial) value of SliceQpY may be modified at the slice segment layer if/when a non-zero value of slice_qp_delta is coded. The value of init_qp_minus26 may be modified to be in the range of ( - 26 + QpBdOffsetY ) to +37. If/when the size of a transform block is not a power of 4, the transform coefficients may be processed along with a modification to the QP or QP levelScale table rather than by multiplication by 181/256 (or 181/128) (e.g., to compensate for an implicit scaling by the transform process). For transform skip block, a minimum allowed QP may be 4 (e.g., because a quantization step size may become 1 if/when a QP is equal to 4).

A fixed look-up table may be used to convert the luma QP QP_{Y} to chroma QP QPc. A more flexible luma-to-chroma QP mapping may be used. Instead of having a fixed table, the luma-to-chroma QP mapping relationship may be signalled in a parameter set (e.g., the SPS) using a flexible piecewise linear model (e.g., with a constraint on the linear model being that the slope of each piece may not be negative (e.g., as luma QP increases, chroma QP may stay flat or increase, but may not decrease)). The piecewise linear model may include a number of pieces in the model, or input (luma) and output (chroma) delta QPs for that piece. The input range of the piecewise linear model may be [-QpBdOffset_{Y}, 63] and the output range of the piecewise linear model may be [-QpBdOffsetc, 63]. The QP mapping relationship may be signalled separately for Cb, Cr and/or joint Cb/Cr coding, or signalled jointly for (e.g., all) three types of residual coding.

CU-level QP adaptation may be provided. Delta QP values for luma and chroma components may be signalled (e.g., separately). For the chroma components, the enabled chroma QP offset values may be signalled in the form of an offset list in a parameter set (e.g., the picture parameter set (PPS)) (e.g., in a similar manner). The list may be defined (e.g., separately) for Cb, Cr, and/or joint Cb/Cr coding. One or more (e.g., up to six) offset values may be included for a (e.g., each of) Cb, Cr, and/or joint Cb/Cr list(s). At the CU-level, an index may be signalled to indicate an offset value (e.g., which one of the offset values) in the offset list that may be used to adjust the chroma QP for the CU. CU chroma QP offset signalling may be provided by the virtual processing data unit (VPDU) CU QP delta availability, and/or for a CU larger than 64x64, the chroma QP offset may be sent with the first transform unit (e.g., regardless of if/whether it includes non-zero coding block flag (CBF)).

Intra sub-partitioning (ISP) may be described herein.

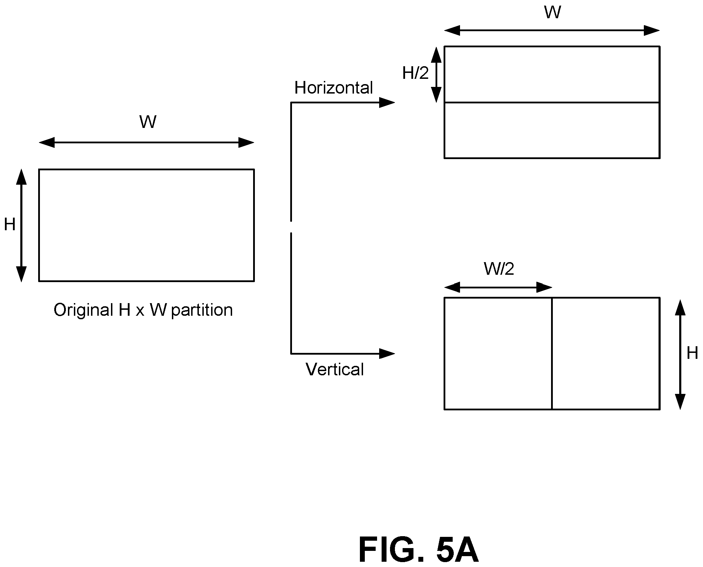

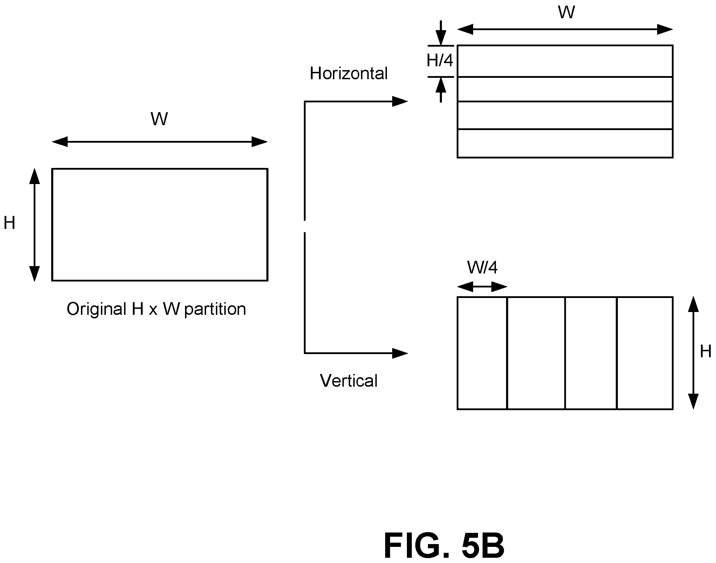

The ISP may divide luma intra-predicted blocks vertically or horizontally into two or four sub-partitions depending on the block size. A minimum block size for ISP may be 4x8 or 8x4. If a block size is greater than 4x8 or 8x4 the corresponding block may be divided by four sub-partitions. The *M* × 128 (with *M* ≤ 64) and 128 × *N* (with *N* ≤ 64) ISP blocks may generate an (e.g., potential) issue with the 64 × 64 VDPU. An *M* × 128 CU in the single tree case may include an *M* × 128 luma TB and two corresponding $\frac{M}{2} \times 64$ chroma TBs. If the CU uses ISP, the luma TB may be divided into four *M* × 32 TBs (e.g., only the horizontal split may be possible), where one or more luma TB(s) (e.g., each of them) may be smaller than a 64 × 64 block. In ISP, chroma blocks may not be divided. One or more (e.g., both) chroma components may include a size greater than a 32 × 32 block. An example may be created with a 128 × *N* CU using ISP. One or more examples described herein (e.g., two cases) may be an issue for the 64 × 64 decoder pipeline. The CU sizes that may use ISP may include a maximum of 64 × 64. FIGS. 5A and 5B illustrate two sub-partition examples. The sub-partition examples of FIG. 5A and 5B may fulfill the condition of having at least sixteen samples.

In ISP, the dependence of 1xN/2xN subblock prediction on the reconstructed values of previously decoded 1xN/2xN subblocks of the coding block may not be enabled such that the minimum width of a prediction for a subblock may become at least four samples. An 8xN (e.g., N > 4) coding block that is coded using ISP with vertical split may be split into at least two prediction regions (e.g., each) of size 4xN and at least four transform(s) of size 2xN. A 4xN coding block that is coded using ISP with vertical split may be predicted using a (e.g., the full) 4xN block (e.g., four transform each of 1xN may be used). Although the transform sizes of 1xN and 2xN may be provided, the transform of a block in 4xN region(s) may be performed in parallel. If/when a 4xN prediction region includes four 1xN transforms, there may not be a transform in the horizontal direction (e.g., the transform in the vertical direction may be performed as a (e.g., single) 4xN transform in the vertical direction). If/when a 4xN prediction region includes two 2xN transform blocks, the transform operation of the two 2xN blocks in a (e.g., each) direction (e.g., horizontal and/or vertical) may be conducted in parallel. There may not be a delay added in processing a smaller block compared to processing a 4x4 regular-coded intra block.For a (e.g., each) sub-partition, reconstructed samples may be obtained by adding the residual signal to the prediction signal. A residual signal may be generated by entropy decoding, inverse quantization, and an inverse transform. The reconstructed sample values of a (e.g., each) sub-partition may be available to generate the prediction of a (e.g., the next) sub-partition, andr a (e.g., each) sub-partition may be processed repeatedly. The first sub-partition to be processed may include the top-left sample of the CU and then a second sub-partition to be processed may continue in a downward direction (e.g., a horizontal split) or in a rightward direction (e.g., a vertical split). Reference samples used to generate the sub-partitions prediction signals may be (e.g., are only) located at the left and above sides of the lines. A sub-partition (e.g., all sub-partitions) may share the same intra mode. One or more interaction(s) of ISP with a coding tool may include: a multiple reference line (MRL), an entropy coding coefficient group size, a CBF coding, a transform size reduction, or an MTS flag.

An MRL may be described herein. For MRL, if a block includes an MRL index other than 0, the ISP coding mode may be inferred to be 0, and the ISP mode information may not be sent to the decoder.

An entropy coding coefficient group size may be described herein. For an entropy coding coefficient group size, the sizes of the entropy coding subblocks may have been modified so that the subblocks include 16 samples in one or more examples (e.g., all possible cases), as shown in Table 1. Note that the (e.g., new) sizes may (e.g., only) affect blocks produced by ISP in which a dimension (e.g., one of the dimensions) is less than 4 samples. In other examples (e.g., all other cases), coefficient groups may keep the 4 × 4 dimensions.

**Table 1 - Entropy coding coefficient group size**

| Block Size | Coefficient group Size |
|---|---|
| 1 ×*N, N* ≥ 16 | 1 × 16 |
| *N* × 1, *N* ≥ 16 | 16 × 1 |
| *2* × *N, N* ≥ 8 | 2 × 8 |
| *N* × 2, *N* ≥ 8 | 8 × 2 |
| Other (e.g., all other possible) *M* × *N* cases | 4 × 4 |

CBF coding may be described herein. For CBF coding, at least one of the sub-partitions may have a non-zero CBF. If *n* is the number of sub-partitions and the first *n* - 1 sub-partitions have produced a zero CBF, the CBF of the *n*-th sub-partition may be inferred to be 1.

A transform size restriction may be described herein. For transform size reduction, an (e.g., all) ISP transform(s) with a length larger than 16 points may use the DCT-II.

An MTS flag may be described herein. For an MTS flag, if a CU uses the ISP coding mode, the MTS CU flag may be set to 0 and/or the MTS CU flag may not be sent to the decoder. The encoder may not perform RD tests for one or more (e.g., the different) available transforms for a (e.g., each) resulting sub-partition. The transform choice for the ISP mode may instead be fixed and/or selected according the intra mode, the processing order, and/or the block size utilized. Signalling may not be requested. For example, let *t_{H}* and *t_{V}* may be the horizontal and the vertical transforms selected respectively for the *w* × *h* sub-partition, where *w* is the width and *h* is the height. The transform may be selected based on the following: if *w* = 1 or *h =* 1, there may be no horizontal or vertical transform respectively; if *w* ≥ 4 and *w* ≤ 16, *t_{H}* may be DST-VII, otherwise, *t_{H}* may be DCT-II; and/or if *h* ≥ 4 and *h* ≤ 16, *t_{V}* may be DST-VII, otherwise, *t_{V}* may be DCT-II.

In ISP mode, one or more (e.g., all) 67 intra modes may be enabled. Position-dependent intra prediction combination (PDPC) may be applied if a corresponding width and/or height is at least 4 samples long. In examples, the reference sample filtering example (e.g., reference smoothing) and/or the condition for intra interpolation filter selection may not exist (e.g., anymore), and a cubic (DCT-IF) filter may be (e.g., always) applied for fractional position interpolation in ISP mode.

A max TU size may be described herein.

The maximum transform size may be signaled at a sequence level. The maximum transform size may be signaled if/whether 64x64 kernels are enabled or 32x32 (e.g., only). If/when 64x64 kernels are not enabled, a TU split may be performed for a large CU (e.g., a TU whose size is 64xN or Mx64). CU's may be divided into one or more TU's and/or 32x32 transform kernels may be used.

Template based tools may be described herein.

One or more template-based tools may be described herein. The template may be the reconstructed pixels on the top and/or left of the current block (e.g., that are available to an encoder and/or decoder). The template based tools may perform an operation (e.g., the same operation) on the encoder and/or decoder such that no signaling is provided for prediction parameters. One or more examples of template-based tools may include: intra template tools (e.g., intra template matching (IntraTMP) and/or decoder-side intra mode derivation (DIMD)), and/or inter template matching (e.g., Inter TM and/or adaptive re-ordering of merge candidates with template matching (ARMC)).

Intra template tools may include IntraTMP and/or DIMD.

IntraTMP may be an intra prediction tool based on template matching. The prediction examples may be based on copying a reference block in the reconstructed intra part, where the template difference may be employed to find the optimal (e.g., best) candidate. The example may be performed at an encoder and/or decoder side (e.g., so that no signaling may be provided about the coordinate of the reference block).

A DIMD prediction mode may be based on analyzing the template pixels to find the dominant orientation. The dominant orientation may be translated into an angular prediction for the current block.

Inter template matching may include Inter TM and/or ARMC.

In Inter TM,, the signaled motion vector may be refined by a template matching example. An optimal (e.g., better) motion estimation may be performed at an encoder and/or decoder side to improve the inter prediction. The improved motion estimation may be based on finding one or more (e.g., other) reference block(s), whose template difference is minimum with respect to the current block template.

In ARMC, the merge candidates for the current block may be re-ordered based on the template cost. A (e.g., each) merge candidate template may be compared to the current block template and/or the template cost may be calculated. The template cost may be used for sorting the candidate.

When TU split is enabled, a (e.g., one) CU may include one or more TU(s). With the use of template-based tools, the template at a CU level may be different from the template used at a TU level. For one or more tools, the signaling of using template-based tools may be performed before a TU split. The calculation of a template parameter(s) may be performed on a CU template rather than TU template, and/or the (e.g., actual) tool application may be performed at TU level. A discrepancy between the template calculation and an application may lead to an inaccurate prediction of the current block.

Examples described herein may resolve a divergence in the template calculation and/or application if/when a TU split is performed. A divergence may occur if/when TU split is performed in ISP, SBT, and/or a max transform size split. A divergence may occur if/when a TU split is performed.

If/when a TU split is performed, the template calculation may be moved from a CU level to a TU level (e.g., If an encoder/decoder determines to perform a TU split, the template calculation may be applied at the TU level). The template calculation at the TU level may improve the accuracy of a template calculation and/or improve the prediction of the current block.

An example of recalculating (e.g., a template calculation) at a TU level may be described herein.

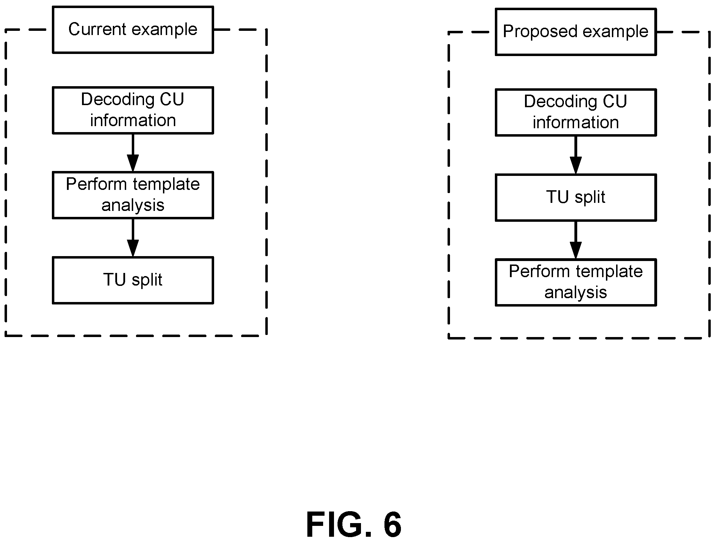

FIG. 6 is a block diagram illustrating an example of performing a template calculation at a CU level and at a TU level. In examples, if a template-based tool is signaled at a CU level, a template calculation (e.g., the corresponding template calculation) may be performed on a TU template (e.g., rather than CU template).

For a template-based tool (e.g., for any of the template-based tools), the encoder may signal, at a CU level, if/whether the template-based tool is used. If a template-based tool is used, the template calculation may be moved from a CU level to a TU level. A (e.g., each) TU template may be (e.g., independently) used for matching and/or a calculation (e.g., instead of using the bigger CU template). Moving the template calculation from a CU level to a TU level may improve the template matching and/or calculation as the template may be closer to the block being processed (e.g., rather than using the larger block corresponding to CU level).

A template tool may be disabled (e.g., disallowed) if/when a TU is less than a CU.

Template-based tools may not be enabled if/when a TU is smaller than a CU. In examples, before parsing the flag of a template-based tool, if a TU split occurs, the template-based tool may not be enabled, and/or the tool's corresponding syntax may not be signaled. If a template matching (TM) tool is used, a TU split may be not enabled and/or not signaled. One or more examples may be provided.

In examples, TM tools may be disabled.

For example, if/when the transform size is determined to be less than the current block size (e.g., when the transform size is less than the current block size a priori), and/or if/when the block exceeds the maximum transform size (e.g., the supported maximum transform size), a TM syntax may not be signaled, and/or a TM tool may be disabled for the current block.

In examples, a TU split may be disabled (e.g., a TU split may be prevented by the encoder/decoder).

For example, if/when a TM tool is used for the current block, the TU split for the current block may not be enabled and/or the corresponding syntax element may not be signaled.

In examples, a template analysis may be performed on the TU blocks where a portion of the TU boundary and/or a portion of the CU boundary are similar (e.g., the TU boundary partially coincides with the CU boundary). The template analysis (e.g., performed when a portion of the TU boundary and portion of the CU boundary are similar) may be performed on the template that is similar with the TU boundary (e.g., template analysis may be performed on the template that coincides with the TU boundary).

One or more embodiments provide a computer program comprising instructions which when executed by one or more processors cause such processors to perform the encoding and/or decoding methods according to any of the embodiments described above. One or more embodiments also provide a computer readable storage medium having stored thereon instructions for encoding or decoding video data according to the methods described above.

One or more embodiments provide a computer readable storage medium having stored thereon video data generated according to the methods described above. One or more embodiments also provide a method and apparatus for transmitting or receiving video data generated according to the methods described above.

The embodiments described herein may be implemented in, for example, a method or a process, an apparatus, a software program, a data stream, or a signal. Even if only discussed in the context of a single form of implementation (e.g., as a method), the implementation of such features may also be implemented in other forms. An apparatus may be implemented in, for example, appropriate hardware, software, and firmware. Corresponding methods may be implemented in, for example, a processor.

Various methods and aspects described herein can be used to modify one or more modules. For example, the intra predictors and inter predictors described with respect to FIGS. 2 and 3 may be implemented as one or more modules and modified according to the various embodiments of the present disclosure.

The various embodiments described herein provide at least the following features, devices or aspects, alone or on any combination, across various claim categories and types:
i. Encoding, into coded video data, syntax elements that can enable the decoder to decode the coded video data, according to any of the embodiments described herein.
ii. Video data (e.g., a bitstream) that may include one or more of the described syntax elements, or variations thereof, whether transmitted, stored, or otherwise made available.
iii. Creating, transmitting, receiving, and/or decoding of the bitstream.
iv. An electronic device (e.g., TV, set-top box, mobile phone, tablet, etc.) that tunes a channel to receive a bitstream or that receives such bitstream over the air. The electronic device decodes the syntax elements from the bitstream, and, optionally, displays (e.g., via a monitor or other type of display) a resulting image.

Various numeric values are used in the present application. Such specific values are for example purposes and the embodiments described are not limited to these specific values.

Various methods are described herein, and such methods comprise one or more steps or actions for achieving the described method. Unless a specific order of steps or actions is required for the proper operation of the method, the order and/or use of specific steps and/or actions may be modified or combined. Additionally, terms such as "first", "second", etc. may be used in various embodiments to modify an element, component, step, operation, etc., for example, a "first decoding" and a "second decoding". Use of such terms does not imply an order to the operations unless specifically required.

The present disclosure may refer to "determining" various pieces of information. Determining information may include one or more of, for example, estimating, calculating, predicting, or retrieving (e.g., from memory) the information.

The present disclosure may refer to "accessing" various pieces of information. Accessing information may include one or more of, for example, receiving, retrieving (e.g., from memory), storing, moving, copying, calculating, determining, predicting, or estimating the information. Similarly, the present disclosure may refer to "receiving" various pieces of information. Receiving information may include one or more of, for example, accessing or retrieving (e.g., from memory) the information.

"Decoding," as used herein, encompasses all or part of the processes performed, for example, on an encoded sequence to produce an output suitable for display. In some embodiments, such processes include one or more of the processes typically performed by a decoder, for example, entropy decoding, inverse quantization, etc. Whether the phrase "decoding process" is intended to refer to a subset of operations or generally to the broader decoding process will be clear based on the context of the specific description and will be well understood by those skilled in the art.

"Encoding," as used herein, encompasses all or part of the processes performed, for example, on input video data an order to produce an encoded bitstream. Additionally, the terms "reconstructed" and "decoded" may be used interchangeably, the terms "encoded" or "coded" may be used interchangeably, the terms "image," "picture," "sub-picture," "slice," and "frame" may be used interchangeably, and the terms "pixel" and "sample" may be used interchangeably.

The present disclosure refers to information, for example, syntax elements, that can be transmitted or stored. Such information can be packaged or arranged in a variety of manners, including for example manners common in video standards such as putting the information into a sequence parameter set (SPS), a picture parameter set (PPS), a network abstraction layer (NAL) unit, a header (for example, a NAL unit header, or a slice header), or an SEI message. Other manners are also available, including, for example, manners that are common for system level or application-level standards such as signaling the information into one or more of the following:
i. session description protocol (SDP), for example as described in RFCs and/or used in conjunction with real-time transport protocol (RTP) transmission.
ii. hypertext transfer protocol (HTTP) live Streaming (HLS) manifest transmitted over HTTP.
iii. dynamic adaptive streaming over HTTP (DASH) media presentation description (MPD) descriptors, for example as used in DASH and transmitted over HTTP.
iv. RTP header extensions, for example as used during RTP streaming.
v. Intemational Organization for Standardization (ISO) base media file format, for example, as used in Omnidirectional MediA Format (OMAF).

As used herein, "signal" and "signaling" refer to, among other things, indicating information to a decoder. For example, in some embodiments the encoder signals a quantization matrix for de-quantization, whereby the same parameter may be used for both encoding and decoding. In some embodiments, the signaling may be explicit, such that information (e.g., a particular parameter) is transmitted to the decoder enabling the decoder to use the same particular parameter. In some embodiments, the signaling may be implicit, in that the information (e.g., a particular parameter) is indicated based on other information at or transmitted to the decoder or derived or selected by the decoder based on information available at the decoder. By not transmitting the information (e.g., the particular parameter), bit savings is thus realized in some embodiments. In some embodiments, one or more syntax elements or flags are used to signal information to a decoder. While the preceding relates to the verb form of the word "signal", the word "signal" can also be used herein as a noun.

In some embodiments, signals may be produced that are formatted to carry information that may be stored or transmitted. Such information may include, for example, instructions for performing a method, or data produced by one of the described implementations (e.g., a bitstream of a described embodiment). Such a signal may be formatted, for example, as an electromagnetic wave or as a baseband signal. The formatting may include, for example, encoding a data stream and modulating a carrier with the encoded data stream. The information that the signal carries may be, for example, analog or digital information. The signal may be transmitted over a variety of different wired or wireless links and may be stored on a processor-readable medium.

It is to be understood that use of any of the following "/", "and/or", and "at least one of" is intended to encompass all possible selections of listed items, taken either individually or in any combination thereof.

While specific embodiments have been described in the foregoing description in connection with the accompanying drawings, it should be understood that embodiments described herein are examples only and should not be taken as limiting the scope of the present disclosure or the following claims. Although features and elements are described herein in particular combinations, those of ordinary skill in the art will appreciate that such features or elements may be used alone or in any combination with the other features and elements. It is understood, therefore, that the overall teachings of the present disclosure are not limited to the particular embodiments, implementations, and examples disclosed herein, but are intended to cover variations, modifications, and alternatives as defined by the appended claims and any and all equivalents thereof.

## Claims

1. A video decoding device comprising:
a processor configured to:
receive an indication that a template-based tool is enabled for a coding unit;
split the coding unit into a first transform unit (TU) and a second TU;
determine a first prediction of the first TU based on a first template associated with the first TU;
determine a second prediction of the second TU based on a second template associated with the second TU; and
decode the coding unit based on the first prediction and the second prediction.

2. The video decoding device of claim 1, wherein the coding unit is a first coding unit, the processor is further configured to:
split a second coding unit into a third TU and a fourth TU;
based on the second coding unit being split into a third TU and a fourth TU, determine that the template-based tool is disabled for the second coding unit; and
decode the second coding unit based on a non-template based tool.

3. The video decoding device of claim 1, wherein the coding unit is a first coding unit, the processor is further configured to:
receive an indication that the template-based tool is enabled for a second coding unit;
based on the indication, skip TU splitting for the second coding unit; and
decode the second coding unit based on the template-based tool.

4. The video decoding device of claim 1, wherein the coding unit is a first coding unit, the processor is further configured to:
split a second coding unit into a third TU and a fourth TU;
determine that a boundary of the third TU at least partially overlaps with a boundary of the second coding unit;
determine a third prediction of the second coding unit based on a third template associated with the boundary of the third TU; and
decode the second coding unit based on the third prediction.

5. The video decoding device of any one of claims 1-4, wherein the processor is further configured to:
based on receiving the indication that the template-based tool is enabled for the coding unit, determine to split the coding unit into the first and second TUs prior to performing a template analysis using the template-based tool.

6. A video encoding device comprising:
a processor configured to:
split a coding unit into a first transform unit (TU) and a second TU;
determine a first prediction of the first TU based on a first template associated with the first TU;
determine a second prediction of the second TU based on a second template associated with the second TU;
encode the coding unit based on the first and second predictions; and
include, in video data, the encoded coding unit and an indication that a template-based tool is enabled for the coding unit.

7. The video encoding device of claim 6, wherein the coding unit is a first coding unit, the processor is further configured to:
split a second coding unit into a third TU and a fourth TU;
based on the second coding unit being split into a third TU and a fourth TU, determine that the template-based tool is disabled for the second coding unit;
encode the second coding unit; and
include, in the video data, the encoded second coding unit, wherein the video data does not include an indication that the template-based tool is enabled for the second coding unit.

8. The video encoding device of claim 6, wherein the coding unit is a first coding unit, the processor is further configured to:
encode a second coding unit based on the template-based tool;
based on the second coding unit being encoded based on the template-based tool, skip TU splitting for the second coding unit; and
include, in the video data, the encoded second coding unit, wherein the video data does not include syntax associated with TU splitting.

9. The video encoding device of claim 6, wherein the coding unit is a first coding unit, the processor is further configured to:
split a second coding unit into a third TU and a fourth TU;
determine that a boundary of the third TU at least partially overlaps with a boundary of the second coding unit;
determine a third prediction of the second coding unit based on a third template associated with the boundary of the third TU;
encode the second coding unit based on the third prediction; and
include, in the video data, the encoded second coding unit.

10. The video encoding device of any one of claims 6-9, wherein the processor being configured to include, in the video data, the indication that the template-based tool is enabled for the coding unit comprises the processor being configured to include, in the video data, the indication that the template-based tool is enabled for the coding unit based on determining to split the coding unit into the first and second TUs prior to performing a template analysis using the template-based tool.

11. A method comprising:
receiving an indication that a template-based tool is enabled for a coding unit;
splitting the coding unit into a first transform unit (TU) and a second TU;
determining a first prediction of the first TU based on a first template associated with the first TU;
determining a second prediction of the second TU based on a second template associated with the second TU; and
decoding the coding unit based on the first prediction and the second prediction.

12. The method of claim 11, wherein the coding unit is a first coding unit, and the method further comprises:
splitting a second coding unit into a third TU and a fourth TU;
based on the second coding unit being split into a third TU and a fourth TU, determining that the template-based tool is disabled for the second coding unit; and
decoding the second coding unit based on a non-template based tool.

13. The method of claim 11, wherein the coding unit is a first coding unit, and the method further comprises:
receiving an indication that the template-based tool is enabled for a second coding unit; based on the indication, skipping TU splitting for the second coding unit; and
decoding the second coding unit based on the template-based tool.

14. The method of claim 11, wherein the coding unit is a first coding unit, and the method further comprises:
splitting a second coding unit into a third TU and a fourth TU;
determining that a boundary of the third TU at least partially overlaps with a boundary of the second coding unit;
determining a third prediction of the second coding unit based on a third template associated with the boundary of the third TU; and
decoding the second coding unit based on the third prediction.

15. The method of any one of claims 11-14, wherein the method further comprises:
based on receiving the indication that the template-based tool is enabled for the coding unit, determining to split the coding unit into the first and second TUs prior to performing a template analysis using the template-based tool.
